(19) **Europäisches Patentamt**

**European Patent Office**

**Office européen des brevets**

(11) **EP 1 058 978 B1**

(12) **EUROPÄISCHE PATENTSCHRIFT**

(45) Veröffentlichungstag und Bekanntmachung des Hinweises auf die Patenterteilung:
**25.05.2005 Patentblatt 2005/21**

(21) Anmeldenummer: **00901500.9**

(22) Anmeldetag: **04.01.2000**

(51) Int Cl.⁷: $H04B\ 10/08$

(86) Internationale Anmeldenummer:
**PCT/EP2000/000011**

(87) Internationale Veröffentlichungsnummer:
**WO 2000/041345 (13.07.2000 Gazette 2000/28)**

(54) **MESSUNG DER SIGNALQUALITÄT IN DIGITALEN OPTISCHEN GLASFASERÜBERTRAGUNGSNETZEN DURCH AUSWERTUNG DES SIGNALHISTOGRAMMS**

MEASURING THE SIGNAL QUALITY IN DIGITAL OPTICAL FIBER TRANSMISSION NETWORKS BY EVALUATING THE SIGNAL HISTOGRAM

MESURE, PAR EVALUATION DE L'HISTOGRAMME DU SIGNAL, DE LA QUALITE DU SIGNAL DANS DES RESEAUX DE TRANSMISSION NUMERIQUES OPTIQUES A FIBRES DE VERRE

(84) Benannte Vertragsstaaten:
**DE FR GB IT**

(30) Priorität: **04.01.1999 AT 799**

(43) Veröffentlichungstag der Anmeldung:
**13.12.2000 Patentblatt 2000/50**

(73) Patentinhaber: **Siemens Aktiengesellschaft**
**80333 München (DE)**

(72) Erfinder:
• **Rasztovits-Wiech, Michael**
**1170 Wien (AT)**
• **Studer, Klaus**
**6721 Blons 88 (AT)**

(74) Vertreter: **Berg, Peter, Dipl.-Ing. et al**
**Siemens AG**
**Postfach 22 16 34**
**80506 München (DE)**

(56) Entgegenhaltungen:
**EP-A- 0 884 868      US-A- 5 585 954**

• **BERGANO N S ET AL: "MARGIN MEASUREMENTS IN OPTICAL AMPLIFIER SYSTEMS" IEEE PHOTONICS TECHNOLOGY LETTERS,US,IEEE INC. NEW YORK, Bd. 5, Nr. 3, 1. März 1993 (1993-03-01), Seiten 304-306, XP000616830 ISSN: 1041-1135**
• **NISHIMOTO H ET AL: "NEW METHOD OF ANALYZING EYE PATTERNS AND ITS APPLICATION TO HIGH-SPEED OPTICAL TRANSMISSION SYSTEMS" JOURNAL OF LIGHTWAVE TECHNOLOGY,US,IEEE. NEW YORK, Bd. 6, Nr. 5, Mai 1988 (1988-05), Seiten 678-685, XP000759072 ISSN: 0733-8724**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 058 978 B1

## Beschreibung

Die Erfindung ist in das Gebiet der optischen Glasfaserkommunikationssysteme einzuordnen, im speziellen auf die Problematik der Signalüberwachung in sog. transparenten optischen Netzen (all-optical networks), das sind Systeme ohne digitale Zwischenregeneration

## Stand der Technik und zu lösende technische Aufgabe

Moderne optische Glasfaserkommunikationsnetze arbeiten nach dem Wellenlängenmultiplexprinzip (wavelength division multiplex , WDM). Aus Kostengründen werden die einzelnen Wellenlängenmultiplexkanäle nicht mehr in jedem Netzknoten einer vollständigen digitalen Regeneration unterzogen, sondern im allgemeinen nur mehr rein optisch verstärkt, z.B. mithilfe von Erbium-dotierten Faserverstärkern (Er-doped fiber amplifier, EDFA). Während der Übertragung unterliegt das im allgemeinen binär intensitätsmodulierte Signal unterschiedlichen Verzerrungen, wie z. B. durch chromatische Dispersion und Nichtlinearitäten der Glasfaser, sowie Kanalnebensprechen. Weiters wird das Signal durch die spontane Emission (amplified spontaneous emission, ASE) der optischen Verstärker überlagert.

Bisher, gemäß dem derzeitigen Stand der Technik, wird lediglich das Verhältnis der Signalleistung eines Kanals zu der spektralen Leistungsdichte der ASE, das sogenannte optische Signal-Rauschleistungsdichte Verhältnis (optical signal-to-noise-density ratio, OSNR - mit optischen Spektralanalysatoren meßbar) als Kriterium für die Signalqualität herangezogen. Da die Signalform nicht in das OSNR eingeht, kann damit keine hinreichend genaue Aussage über z.B. die Bitfehlerwahrscheinlichkeit (bit-error probability, BEP) getroffen werden.

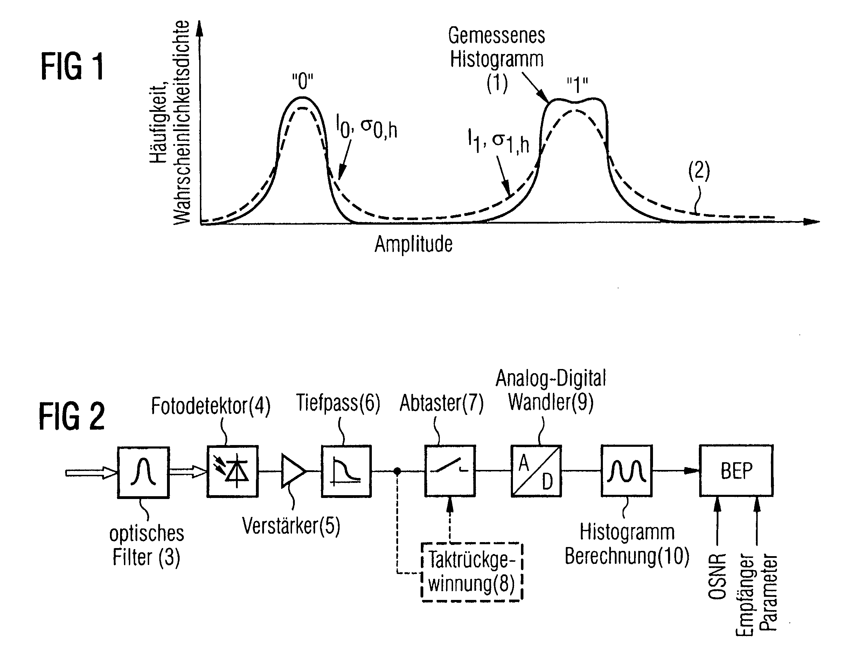

Eine andere Methode verwendet einen optischen Empfänger, d.h. Umwandlung des optischen Signals in ein elektrisches, welches dann in Bitmitte abgetastet wird. Anschließend wird ein Amplitudenhistogramm gebildet, aus dem dann die Mittelwerte und Varianzen der beiden Symbole für "0" und "1", entweder durch Bildung der entsprechenden Momente oder durch Interpolation, ermittelt werden (Fig. 1). Die Varianzen werden dem Einfluß von gaußförmigem Rauschen zugeordnet, (nächstliegender Stand der Technik, z.B. N. Bergano et al. "Margin Measurements in optical amplifier systems" IEEE Photonics Tech. Letters Vol. 5 no. 3 1.03.93) was bei der Berechnung der BEP nur bei vollkommen unverzerrtem und nebensprechfreiem Signal zu einem richtigen Ergebnis führt.

## (III) Die Erfindung

Zur Berechnung der Bitfehlerwahrscheinlichkeit aus dem Amplitudenhistogramm werden der Einfluß von Verzerrungen und Nebensprechen sowie der des Rauschens getrennt behandelt. Die Varianz des Rauschens wird dabei nicht aus dem Histogramm ermittelt sondern aus den Parametern des Empfängers und dem OSNR berechnet.

## (IV) Ausführliche Beschreibung der Erfindung

Figur 2 zeigt ein Beispiel für einen optischen Empfänger der dem hier beschriebenen Verfahren zu Grunde liegt. Das binär intensitätsmodulierte Signal eines einzelnen Wellenlängenkanals wird aus dem Wellenlängenmultiplexsignal mithilfe eines optischen Filters (Bandpaß) selektiert und einem Fotodetektor zugeführt und damit in ein elektrisches amplitudenmoduliertes Signal umgewandelt. Nach einem Verstärker wird dieses Signal mithilfe eines Tiefpasses bandbegrenzt, wobei Bandbreite und Übertragungsfunktion des Tiefpasses entsprechend der Datenrate und Signalform des zu untersuchenden Signals geeignet zu wählen sind.

Das bandbegrenzte Signal wird nun in Bitmitte abgetastet, wobei der dazu erforderliche Takt aus dem Signal selbst gewonnen wird. Alternativ zur Abtastung in Bitmitte kann auch ein komplettes Augendiagramm aufgezeichnet werden, z.B. mithilfe eines Abtastoszilloskops, doch sind hier nur die Werte im Bereich der größten Öffnung des Augendiagramms zu verwenden.

Aus den digitalisierten Abtastwerten wird nun ein Histogramm gebildet, daß nun als Grundlage für die Modellierung der Verzerrungen dient, die im folgenden gezeigt ist. Die Mittelwerte des abgetasteten elektrischen Signals (zur Vereinfachung hier Stromwerte, weiters ist die Verstärkung des elektrischen Verstärkers mit 1 angenommen) $I_0$ und $I_1$ sind proportional zu den optischen Leistungen entsprechend den logischen Zuständen "0" und "1". Aufgrund verschiedener Rauschprozesse [4] sind $I_0$ und $I_1$ mit, in sehr guter Näherung gaußförmigem, Rauschen überlagert mit der Varianz:

$$\sigma_0^2 = 2eB_{el}(I_0 + I_D + 2N_{ASE}B_{opt}S) + (I_A^*)^2 B_{el} + 4SI_0N_{ASE}B_{el} + 4S^2N_{ASE}{}^2B_{opt}B_{el} \qquad (1)$$

$$\sigma_1{}^2 = 2eB_{el}(I_1 + I_D + 2N_{ASE}B_{opt}S) + (I_A^*)^2 B_{el} + 4SI_1 N_{ASE}B_{el} + 4S^2 N_{ASE}{}^2 B_{opt}B_{el} \; . \qquad (2)$$

| | |
|---|---|
| $B_{el}$ | Bandbreite des Tiefpasses |
| $B_{opt}$ | Bandbreite des optischen Filters vor dem Fotodetektor |
| $e$ | Elementarladung (e=1, $602 \cdot 10^{-19}$As) |
| $I_A^*$ | äquivalente spektrale Eingangsrauschstromdichte des elektrischen Verstärkers im optischen Empfänger |
| $I_D$ | Dunkelstrom der Fotodiode |
| $N_{ASE}$ | spektrale Leistungsdichte in einer Polarisationsrichtung der ASE der optischen Verstärker |
| $S$ | Empfindlichkeit der Fotodiode |

In der Praxis erhält man aber selbst im theoretisch unverrauschten Fall bei jedem Bit unterschiedliche Abtastwerte für $I_0$ und $I_1$, bedingt durch Verzerrungen sowie der momentanen Amplitude von Störsignalen. Dadurch sind die aus dem Histogramm durch Berechnung des 2. Moments oder Interpolation ermittelten Varianzen $\sigma^2_{0,h}$ bzw. $\sigma^2_{1,h}$ (nächstliegender Stand der Technik, siehe Fig. 1) von $I_0$ und $I_1$ immer größer als die Varianz des Rauschens nach Gl. 1 und 2.

Die spezielle Methode des hier beschriebenen Verfahrens basiert auf der Interpretation des Histogramms, daß die diskreten Amplitudenklassen im folgenden mit $I_{0,k}$ und $I_{1,k}$ bezeichnet (k = 1...K) den unterschiedlichen Amplitudenwerten eines in Bitmitte abgetasteten rauschfreien realen Signals entsprechen. Zu jedem Amplitudenwert $I_{0,k}$ und $I_{1,k}$ werden die Varianzen $\sigma^2_{0,k}$ bzw. $\sigma^2_{1,k}$ wie in Gl. 1 ($I_0$ durch $I_{0,k}$ ersetzen) bzw. Gl. 2 ($I_1$ durch $I_{1,k}$ ersetzen) berechnet.

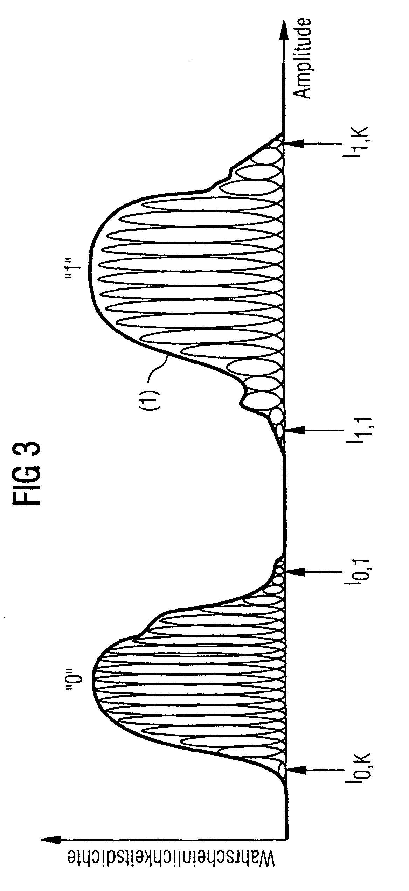

Die statistischen Eigenschaften des verrauschten Signals werden nun, wie in Fig. 3 gezeigt, durch eine Superposition von gaußverteilten Zufallsprozessen $I_{0,k}$ und $I_{1,k}$ mit den Mittelwerten $I_{0,k}$ und $I_{1,k}$ und Varianzen $\sigma^2_{0,k}$ bzw. $\sigma^2_{1,k}$ modelliert.

Die Anzahl der zu wählenden Amplitudenklassen K ist durch die Auflösung des A/D Wandlers (siehe Fig. 2) begrenzt und richtet sich nach dem Verhältnis $\sigma^2_{0,h} / \sigma^2_{0,k}$ bzw. $\sigma^2_{1,h} / \sigma^2_{1,k}$. Je größer dieses Verhältnis ist, desto größer ist K zu wählen, wobei auch verschiedene K für $I_{0,k}$ und $I_{1,k}$ gewählt werden können. Da das Histogramm aber auch die Verteilung des Rauschsignals beinhaltet ist eine Anzahl der jeweils äußersten von Null verschiedenen Amplitudenklassen zu verwerfen, abhängig vom Verhältnis $\sigma^2_{0,h} / \sigma^2_{0,k}$ bzw. $\sigma^2_{1,h} / \sigma^2_{1,k}$ , der Auflösung des A/D Wandlers, aber auch der Gesamtanzahl der Abtastwerte (je mehr Abtastwerte, desto mehr Amplitudenklassen mit von Null verschiedenen Häufigkeitswerten existieren).

Die BEP ergibt sich nun aus der Summe der Wahrscheinlichkeiten, daß $I_{0,k}$ bzw. $I_{1,k}$ einen Schwellwert a (Entscheiderschwelle) über- bzw. unterschreitet [3] nach

$$BEP = \frac{1}{2} \cdot \sum_k \left[ H(I_{0,k}) \cdot erfc\left( \frac{a - I_{0,k}}{\sqrt{2}\sigma_{0,k}} \right) + H(I_{1,k}) \cdot erfc\left( \frac{I_{1,k} - a}{\sqrt{2}\sigma_{1,k}} \right) \right] \qquad (3)$$

wobei "0" und "1" gleich häufig angenommen sind. Es bezeichnen erfc die komplementäre Fehlerfunktion und $H(I_{0,k})$ und $H(I_{1,k})$ die aus dem Histogramm zu berechnende relative Häufigkeit der entsprechenden Amplitudenwerte, wobei

$$\sum_k H(I_{0,k}) + H(I_{1,k}) = 1 \qquad (4)$$

gilt. Die Entscheiderschwelle wird am besten iterativ (BEP → min) ermittelt.

**Patentansprüche**

1. Verfahren zur Überwachung, Berechnung oder Abschätzung der Signalqualität optischer Signale in Glasfaserkommunikationssystemen in Form der Bitfehlerwahrscheinlichkeit, bit-error probabilty, BEP, oder verwandten Größen, wie z.B. den Q-Faktor oder das Bit-zu-Fehler Verhältnis, bit-error-ratio, BER, wobei

   • das optische Signal-Rauschleistungsdichteverhältnis, OSNR, des zu untersuchenden optischen Nachrichtensignals gemessen wird;
- weiters das optische Signal mithilfe eines Fotoempfängers (4) demoduliert wird;
- dann dieses demodulierte Signal abgetastet und aus den Abtastwerten in einem Zeitfenster um die Bitmitte ein Histogramm der auftretenden Amplitudenwerte gebildet wird;
- anschließend dieses Histogramm in der Art und Weise zur Modellierung der Signalstatistik verwendet wird, indem jeder Amplitudenklasse ein unterschiedlicher gaußverteilter Zufallsprozeß zugeordnet wird, dessen Standardabweichung aus dem OSNR, der optischen Signalleistung am Eingang des Fotodetektors und den im folgenden gegebenen Parametern des optischen Empfängers berechnet wird:

    - elektrische Bandbreite des Empfängers
    - Bandbreite des optischen Filters (3) vor dem Fotodetektor
    - äquivalente spektrale Eingangsrauschstromdichte des elektrischen Verstärkers (5)
        im optischen Empfänger
    - Dunkelstrom der Fotodiode (4)
    - Empfindlichkeit der Fotodiode (4);

- dann für jeden Zufallsprozeß die Wahrscheinlichkeit für ein Unter- bzw. Überschreiten eines gewählten Schwellwerts berechnet wird;
- und abschließend die Bitfehlerwahrscheinlichkeit aus der Summe dieser Wahrscheinlichkeiten ermittelt wird.

**Claims**

1. Method for monitoring, calculating or estimating the signal quality of optical signals in glass-fibre communication systems in the form of the bit error probability BEP or related variables, such as for example the Q factor or the bit error ratio BER,

    . the optical signal to noise density ratio of the optical message signal to be analyzed being measured;
    . the optical signal also being demodulated by means of a photoreceiver (4);
    . this demodulated signal then being sampled and a histogram of the amplitude values occurring being formed from the sampling values in a time window around the centre of the bit;
    . this histogram then being used to model the signal statistics in that a different random process distributed in a Gaussian manner is assigned to each amplitude class, its standard deviation being calculated from the OSNR, the optical signal power at the input of the photodetector and the parameters of the optical receiver specified below:

        - electrical bandwidth of the receiver
        - bandwidth of the optical filter (3) before the photodetector
        - equivalent spectral input noise current density of the electrical amplifier (5) in the optical receiver
        - dark current of the photodiode (4)
        - sensitivity of the photodiode (4);

    . then the probability of the value being below or above a selected threshold value being calculated for each random process;
    . and the bit error probability then being determined from the sum of these probabilities.

**Revendications**

1. Procédé de contrôle, de calcul ou d'évaluation de la qualité de signal de signaux optiques dans des systèmes de communication à fibres de verre sous la forme de la probabilité d'erreur sur les bits, bit-error probability, BEP, ou de grandeurs apparentées, tel que par exemple le facteur Q ou le rapport erreur sur bits, bit-error-ratio, BER, procédé dans lequel :

    · on mesure le rapport signal optique sur densité de puissance du bruit, OSNR, du signal de communication optique à examiner ;
    · puis on démodule le signal optique à l'aide d'un photorécepteur (4) ;
    · après cela on échantillonne ce signal démodulé et à partir des échantillons, dans un intervalle de temps autour du milieu de bit, on construit un histogramme des amplitudes apparaissant ;

· on utilise ensuite cet histogramme pour la modélisation des statistiques du signal en attribuant à chaque classe d'amplitudes un processus aléatoire distinct de distribution gaussienne, dont l'écart type est calculé à partir de l'OSNR, de la puissance du signal optique à l'entrée du photodétecteur et des paramètres du récepteur optique, donnés ci-après :

- bande passante électrique du récepteur
- bande passante du filtre optique (3) monté en amont du photodétecteur
- densité spectrale équivalente du courant de bruit d'entrée de l'amplificateur électrique (5) dans le récepteur optique
- courant d'obscurité de la photodiode (4)
- sensibilité de la photodiode (4) ;

· puis on calcule pour chaque processus aléatoire la probabilité d'un sous-dépassement resp. dépassement d'une valeur seuil sélectionnée

· et pour finir on détermine la probabilité d'erreur sur les bits à partir de la somme de ces probabilités.

# FIG 1

Häufigkeit, Wahrscheinlichkeitsdichte

Gemessenes Histogramm (1)

"0"

$I_0, \sigma_{0,h}$

"1"

$I_1, \sigma_{1,h}$

(2)

Amplitude

# FIG 2

optisches Filter (3)

Fotodetektor(4)

Verstärker(5)

Tiefpass(6)

Abtaster(7)

Taktrückge-winnung(8)

Analog-Digital Wandler(9)

Histogramm Berechnung(10)

BEP

OSNR

Empfänger Parameter

# FIG 3

EP 1 058 978 B1